# EUROPEAN PATENT SPECIFICATION

(11) **EP 1 651 885 B1**
(45) Date of publication and mention of the grant of the patent: **19.01.2011**
(21) Application number: 04766296.0
(22) Date of filing: 22.07.2004
(51) Int. Cl.: F16H 7/24

(54) **AN IMPROVED FITTING TOOL FOR DRIVE BELTS**
VERBESSERTES MONTAGEWERKZEUG FÜR ANTRIEBSRIEMEN
OUTIL AMELIORE POUR COURROIES D'ENTRAINEMENT

(30) Priority: 22.07.2003 IT TO20030561
(43) Date of publication of application: 03.05.2006
(73) Proprietor: DAYCO EUROPE S.r.l., Chieti (IT)
(72) Inventor: D'INTINO, Marco, I-65126 Pescara (IT); CAVUTO, Franco, I-66010 Tollo (IT)
(74) Representative: Jorio, Paolo
(86) International application number: PCT/EP2004/051583
(87) International publication number: WO 2005/012766

(56) References cited:
- EP-A- 0 831 247
- DE-C- 277 982
- US-A- 588 838
- US-A- 798 238
- US-A- 1 158 737
- US-B1- 6 402 649

## Description

### TECHNICAL FIELD

The present invention relates to an improved fitting tool for drive belts.

### BACKGROUND ART

As is known, the torque necessary for actuation of the accessories of a motor vehicle is taken from the engine shaft by means of drive belts of a poly-V type run over pulleys.

The belts may present characteristics of rigidity that meet different needs of transmitted torque, belt duration, and ease of application. In fact, a substantially inextensible, i.e., very "rigid", belt presents high values of belt life and transmitted power. However, installation of the belt on the engine is not easy in so far as it normally entails a variation in the distance between the centres of the pulleys.

A current tendency is to facilitate the operations of installation of belts by resorting to the use of so-called "elastic" or "extensible" belts, characterized by values of rigidity to tensile force that are substantially lower than those of belts traditionally used in the automotive sector.

During installation or replacement of the belt, it is necessary to arrive at elongations of a value higher than the value corresponding to normal operating conditions of the belt because it is necessary to force the belt over the side edges of the rims that pulleys normally possess. It is moreover necessary to prevent the belt from getting damaged during this operation. For this reason there is normally used an appropriate fitting tool. A fitting tool for a poly-V belt is described in EP A 0831247 and basically comprises: a shaped support provided with a side wall that rests against the side surface of the pulley and with a second bent wall designed to be set on the grooved rim that carries the V-belt; a guide portion for guiding the belt, which enables the belt to be raised over the side edge of the rim and is rigidly connected to the support; and a seat for enabling insertion of a manoeuvring wrench for facilitating rotation of the pulley.

In particular, the guide portion comprises a bracket extending in cantilever fashion from the side wall of the support, which has a curvilinear profile with generatrices substantially parallel to the axis of the pulley, and a substantially conical element for sending the belt into the groove in which it rides, said conical element having an axis inclined at an acute angle with respect to the axis of rotation of the pulley. In this way a first stretch of the belt is supported in cantilever fashion whilst a second portion is lifted over the side edge of the pulley onto the surface on which the belt rides.

The known fitting tool described above presents certain drawbacks. In the first place, it is far from readily adaptable to pulleys of different diameter in so far as the geometry of the surfaces that interact with the pulley and with the belt is defined in a rigid way.

In addition, during installation or replacement, rotation of the pulley causes the gradual winding of the belt and generates a corresponding increase in the tension on the first stretch of the belt supported in cantilever fashion. This stress generates a toppling moment that tends to render the fitting tool unstable, calls for a manual effort of contrast on the part the technician who is carrying out the operation, and exposes the belt to risks of damage due to interference with the side edge of the pulley.

DE-C-277982 discloses a fitting tool having the features of the preamble of claim 1.

An object of the present invention is to provide an improved fitting tool which is not limited by the above drawbacks.

This object is attained by a pulley according to claim 1.

### BRIEF DESCRIPTION OF THE DRAWINGS

For a better understanding of the present invention there is now described a preferred embodiment, purely by way of nonlimiting example and with reference to the annexed drawings, in which:
- Figure 1 is a front view of a fitting tool for drive belts according to the present invention;
- Figure 2 is a side view of the fitting tool illustrated in Figure 1;
- Figure 3 is a cross-sectional view according to the line 111-111 of Figure 2; and
- Figures 4, 5 and 6 are schematic side views of the fitting tool of Figure 1, illustrating successive phases of the installation of a belt.

### BEST NIODE FOR CARRYING OUT THE INVENTION

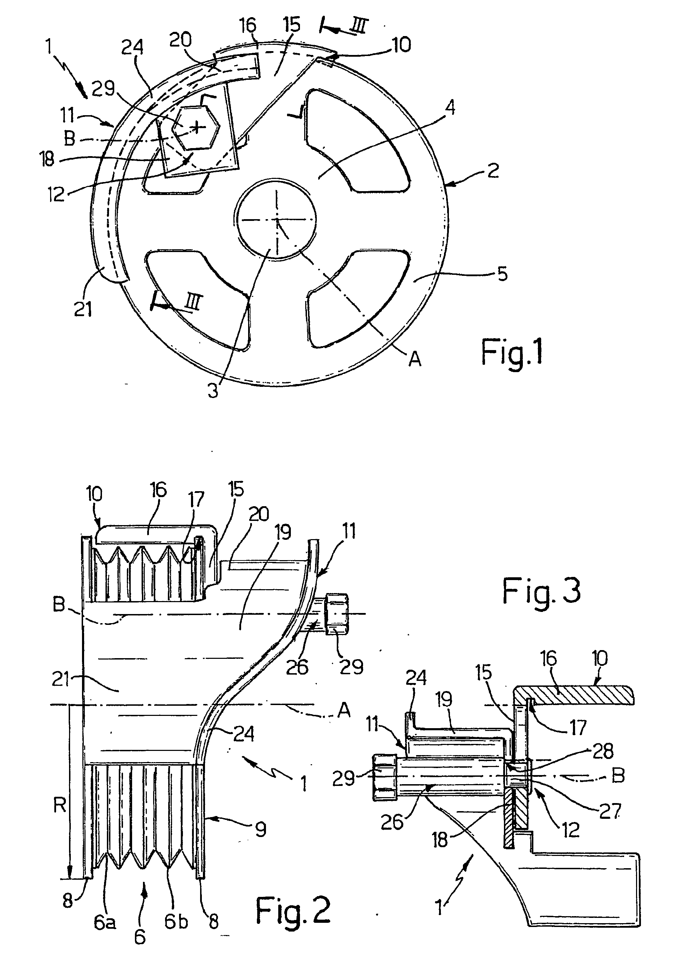

In Figure 1, designated as a whole by 1 is a fitting tool for drive belts according to the teachings of the present invention. The fitting tool 1 is represented in a position of installation on a pulley 2 of the multiple-race or poly-V type, which has an axis A and is rigidly connected to an engine shaft 3 of an internal-combustion engine M (not represented).

The pulley 2 comprises a hub 4, which is designed to be fixed to the engine shaft 3, and a peripheral annulus 5 defining a seat 6 for carrying a belt 7 of a rpoly-V type. The seat 6 has a plurality of V-shaped grooves 6a alternating with crests 6b, and is delimited axially by a pair of sides 8 having an external radius R greater than the external radius of the crests 6b, or effective radius of the pulley 2. The pulley 2 is delimited axially, on the opposite side of the engine M, by a head surface 9, which is substantially plane and perpendicular to the axis A.

The fitting tool 1 comprises a supporting bracket 10 designed to constrain the fitting tool itself to the pulley 2, and a guide element 11 for the belt 7, designed to guide the belt 7 during installation on the pulley 2. The supporting bracket 10 and the guide element 11 are connected together by means of a hinge 12 with axis B parallel to the axis A.

In greater detail, the supporting bracket 10 fixedly comprises a plane plate 15 designed to rest axially, in use, against the head surface 9 of the pulley 2, and an anchoring wall 16, which substantially has the shape of a cylindrical band with generatrices perpendicular to the plate 15 and is designed to rest in use against the annulus 5 of the pulley 2. In the proximity of a sharp edge of joining between the plate 15 and the wall 16, the latter has an internal groove 17 designed to mate, in use, with the side edge 8 of the pulley 2 adjacent to the head surface 9, so as to anchor the fitting tool 1 to the pulley 2.

The guide element 11 in turn comprises: a plane second plate 18 set on top of the plate 15 of the supporting bracket 10 and constrained thereto by means of the hinge 12; and a shaped curvilinear guide wall 19, having generatrices parallel to the axes A and B and extending circumferentially with respect to the pulley 2. The second plate 18 is integrally connected to a first end portion 20 of the guide wall 19; this guide wall 19 has a variable radius of curvature conveniently increasing from the end portion 20 towards a second end portion 21 thereof, extending from the opposite side, in a circumferential direction, of the anchoring wall 16.

The first end portion 20 of the guide wall 19 extends from the plate 18 on the side axially opposite to the anchoring wall 16 with respect to the second plate 18 (see Figure 3) so as to be set, in use, in cantilever fashion with respect to the head surface 9 of the pulley 2. The second end portion 21 is partially laid on top, in use, of the peripheral annulus 5 of the pulley 2 so as to cover the side 8 and the seat 6.

The guide wall 19 is delimited axially, in a direction opposite to the second plate 18, by an edge 24 bent radially outwards and having a substantially helicoidal profile, which presents, in the position of installation on the pulley 2, a distance from the head surface 9 of the pulley 2 that is progressively decreasing, proceeding from the first end portion 20 to the second end portion 21, where it terminates substantially at the same axial height as that of the plate 15 of the supporting bracket 10.

The hinge 12 comprises a pin 26 of axis B, which has an end 27 of smaller diameter set passing through a hole 28 of the second plate 18 and fixed, for example driven or welded, to the plate 15. The pin 26 moreover comprises a hexagonal head 29 for a manoeuvring wrench (not illustrated) at its end opposite to the end 27.

Operation of the fitting tool 1 is described in what follows, starting from a condition in which the belt 7 has already been fitted on the other pulley or on all the other pulleys forming part of the drive, in a way not illustrated.

The anchoring of the fitting tool 1 on the pulley 2 is obtained by means of positioning of the supporting bracket 10 on the side 8, which thus engages the groove 17. In this condition, the hinge 12 enables the guide element 11 to rotate with respect to the supporting bracket 10 until the second end portion 21 of the guide wall 19 rests on the annulus 5 of the pulley 2. In this way, the fitting tool 1 can adapt easily to pulleys of different diameter.

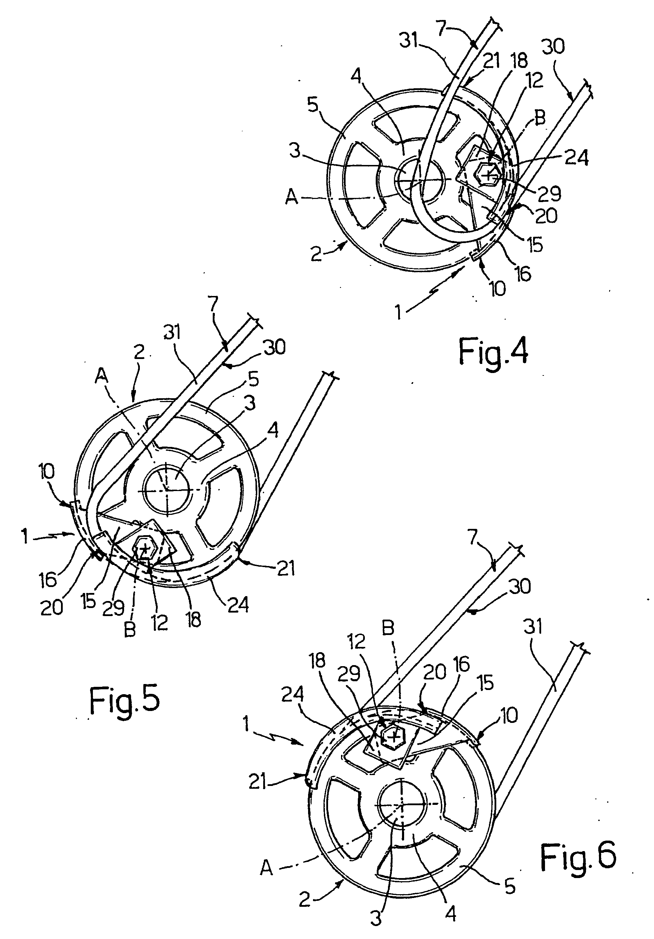

After this first operation of anchoring the pulley 2 is completed, the latter is rotated manually so as to set the guide element 11 towards the other pulley (or other pulleys) in such a way as to enable the technician to fit the belt 7, which is slack, manually and without any effort around the guide wall 19 (see Figure 4), on which it rests radially starting from the first end portion 20 with a working surface 30 thereof; a lateral surface 31 of the belt 7 rests against the edge 24.

Next, the pulley 2 is rotated, by acting with a manoeuvring wrench on the hexagonal head 29 of the pin 26, in such a way as to cause the belt 7 to adhere to progressively increasing portions of the wall 19, up to the second end portion 21 (see Figure 5).

During the aforesaid rotation, the belt 7 receives from the helicoidal edge 24 a side thrust so as to be displaced laterally, in a progressive way, until it is set over the annulus 5.

Proceeding with the rotation of the pulley 2, the belt 7 is inserted completely in the seat 6 (see Figure 6). It is interesting to note that, during rotation, the pulley 2, the fitting tool 1, and the belt 7 are fixed and that the belt 7 enters completely into the seat 6 only once the pulley has turned through an angle of rotation sufficient to enable the fitting tool 1 to exceed the arc of winding of the belt 7.

Thanks to the shape of the guide wall 19 and in particular to the fact that the second end portion 21 is set over the side 8 and over the seat 6, the belt 7 is tensioned so as to cause it to pass over the side edge 8 without any undesirable interaction therewith and with the crests 6b of the seat 6, thus preventing any damage to the belt itself.

From an examination of the characteristics of the fitting tool 1 built according to the present invention, the advantages that it makes possible emerge clearly.

In particular, the toppling moment due to the action of the belt 7 on the part set in cantilever fashion of the guide wall 19 is counterbalanced by the action of the groove 17 and of the guide wall 19, leaving to the technician just the task of supplying the torque necessary for rotation of the pulley 2.

Finally, the presence of the hinge 12 enables a fast and convenient adaptation of the fitting tool 1 to pulleys of any diameter, at the same time ensuring stable anchorage.

It is clear that modifications and variations may be made to the fitting tool 1 described and illustrated herein, without thereby departing from the sphere of protection of the present invention, as defined in the annexed claims.

In particular, the supporting wall 16 can be constrained to the plate 15 by means of a second hinge of axis parallel to the axes A and B. This hinge enables, in use, adjustment of the supporting wall 16 in an angular position tangential to the annulus 5, further improving adaptability of the fitting tool 1.

## Claims

1. A fitting tool (1) for installation of a drive belt (7) on a pulley (2), comprising a guide element (11) provided with at least one curvilinear guide wall (19) for a working surface (30) of said belt (7) and with side guide means (24) for laterally guiding said belt (7), said means being designed to exert an axial thrust on said belt (7) in response to a rotation of said pulley (2), said fitting tool (1) comprising a supporting bracket (10) provided with anchoring means (16) for anchorage to said pulley (2), said guide element (11) being connected in a mobile way to said supporting bracket (10) by means of a hinge (12), **characterized in that** said guide wall (19) comprises a first end portion (20), which is adjacent to said supporting bracket (10) and extends in use axially in cantilever fashion from said pulley (2), and a second end portion (21), which, in use, is partially set over said annulus (5) of said pulley (2).

2. The fitting tool according to Claim 1, **characterized in that** said supporting bracket (10) comprises a resting plate (15) designed to co-operate with a head surface (9) of said pulley (2).

3. The fitting tool according to Claim 2, **characterized in that** said supporting bracket (10) comprises an anchoring wall (16), which is designed to co -operate with an annulus (5) of said pulley (2) and defines said anchoring means (16).

4. The fitting tool according to Claim 3, **characterized in that** said anchoring means (16) comprise a groove (17) made within said anchoring wall (16) in the proximity of a sharp edge of joining between said plate (15) and said anchoring wall (16) and designed to co-operate with a side edge (8) of said annulus (5) of said pulley (2).

5. The fitting tool according to any one of the preceding claims, **characterized in that** said side-guide means (24) for guiding said belt (7) comprise an edge (24) of said guide wall (19) bent radially outwards and having a substantially helicoidal profile.

6. The fitting tool according to any one of the preceding claims, **characterized in that** it comprises a head (29), which can be actuated by means of a manoeuvring wrench.

7. The fitting tool according to Claim 6, **characterized in that** said hinge (12) comprises a pin (26), which is rigidly connected to one between said guide element (11) and said supporting bracket (10) and can turn within a hole (28) of another between said guide element (11) and said supporting bracket (10), said pin (26) defining said head (29) integrally.

## Patentansprüche

1. Montagewerkzeug (1) zur Einrichtung eines Antriebsriemens (7) auf einer Riemenscheibe (2), umfassend ein Führungselement (11), das mit wenigstens einer kurvenförmigen Führungswand (19) versehen ist für eine Arbeitsfläche (30) des Riemens (7) und mit Seitenführungsmitteln (24) zum seitlichen Führen des Riemens (7), wobei die Mittel ausgelegt sind, einen axialen Druck auf den Riemen (7) in Reaktion auf eine Rotation der Riemenscheibe (2) auszuüben, wobei das Montagewerkzeug (1) eine Stützklammer (10) umfasst, die mit Ankermitteln (16) versehen ist zum Ankern an der Riemenscheibe (2), wobei das Führungselement (11) mit der Stützklammer (10) auf bewegliche Weise mittels eines Gelenks (12) verbunden ist,
**dadurch gekennzeichnet, dass** die Führungswand (19) einen ersten Endabschnitt (20) umfasst, der an der Stützklammer (10) anliegt und sich in Betrieb axial freitragend von der Riemenscheibe (2) erstreckt, sowie einen zweiten Endabschnitt (21), der in Betrieb teilweise über den Kranz (5) der Riemenscheibe (2) gesetzt ist.

2. Montagewerkzeug gemäß Anspruch 1, **dadurch gekennzeichnet, dass** die Stützklammer (10) eine Ruheplatte (15) umfasst, die ausgelegt ist, mit einer Kopffläche (9) der Riemenscheibe (2) zusammenzuwirken.

3. Montagewerkzeug gemäß Anspruch 2, **dadurch gekennzeichnet, dass** die Stützklammer (10) eine Ankerwand (16) umfasst, die ausgelegt ist, mit einem Kranz (5) der Riemenscheibe (2) zusammenzuwirken, und die Ankermittel (16) festlegt.

4. Montagewerkzeug gemäß Anspruch 3, **dadurch gekennzeichnet, dass** die Ankermittel (16) eine Rille (17) umfassen, die in der Ankerwand (16) in der Nähe einer scharfen Verbindungskante zwischen der Platte (15) und der Ankerwand (16) gemacht ist und ausgelegt ist, mit einer Seitenkante (8) des Kranzes (5) der Riemenscheibe (2) zusammenzuwirken.

5. Montagewerkzeug gemäß einem der vorhergehenden Ansprüche, **dadurch gekennzeichnet, dass** die Seitenführungsmittel (24) zum Führen des Riemens (7) eine Kante (24) der Führungswand (19) umfassen, die radial nach außen gebogen ist und ein im Wesentlichen schraubenartiges Profil aufweist.

6. Montagewerkzeug gemäß einem der vorhergehenden Ansprüche, **dadurch gekennzeichnet, dass** es einen Kopf (29) umfasst, der mittels eines Manövrierschlüssels betätigt werden kann.

7. Montagewerkzeug gemäß Anspruch 6, **dadurch gekennzeichnet, dass** das Gelenk (12) einen Stift (26) umfasst, der starr mit dem Führungselement (11) oder der Stützklammer (10) verbunden ist und sich in einem Loch (28) des jeweils anderen, dem Führungselement (11) oder der Stützkammer (10), drehen kann, wobei der Stift (26) den Kopf (29) einstückig festlegt.

## Revendications

1. Outil de montage (1) destiné à l'installation d'une courroie de transmission (7) sur une poulie (2), comprenant un élément de guidage (11) doté d'au moins une paroi de guidage curviligne (19) pour une surface de travail (30) de ladite courroie (7) et d'un moyen de guidage latéral (24) destiné à guider latéralement ladite courroie (7), ledit moyen étant conçu pour exercer une poussée axiale sur ladite courroie (7) en réponse à une rotation de ladite poulie (2), ledit outil de montage (1) comprenant une patte de support (10) dotée d'un ou de moyen(s) d'ancrage (16) pour un ancrage sur ladite poulie (2), ledit élément de guidage (11) étant relié de manière mobile à ladite patte de support (10) au moyen d'une articulation (12), **caractérisé en ce que** ladite paroi de guidage (19) comprend une première partie d'extrémité (20), qui est adjacente à ladite patte de support (10) et s'étend en utilisation axialement en porte-à-faux par rapport à ladite poulie (2), et une deuxième partie d'extrémité (21) qui, en utilisation, est partiellement disposée au-dessus de ladite couronne (5) de ladite poulie (2).

2. Outil de montage selon la revendication 1, **caractérisé en ce que** ladite patte de support (10) comprend une plaque d'assise (15) conçue pour coopérer avec une surface de tête (9) de ladite poulie (2).

3. Outil de montage selon la revendication 2, **caractérisé en ce que** ladite patte de support (10) comprend une paroi d'ancrage (16), qui est conçue pour coopérer avec une couronne (5) de ladite poulie (2) et définit ledit moyen d'ancrage (16).

4. Outil de montage selon la revendication 3, **caractérisé en ce que** lesdits moyens d'ancrage (16) comprennent une rainure (17) réalisée à l'intérieur de ladite paroi d'ancrage (16) à proximité d'une arête vive d'une liaison entre ladite plaque (15) et ladite paroi d'ancrage (16) et conçue pour coopérer avec un bord latéral (8) de ladite couronne (5) de ladite poulie (2).

5. Outil de montage selon l'une quelconque des revendications précédentes, **caractérisé en ce que** ledit moyen de guidage latéral (24) destiné à guider ladite courroie (7) comprend un bord ou une arête (24) de ladite paroi de guidage (19) courbé(e) radialement vers l'extérieur et ayant un profil sensiblement hélicoïdal.

6. Outil de montage selon l'une quelconque des revendications précédentes, **caractérisé en ce qu'**il comprend une tête (29) qui peut être actionnée au moyen d'une clé de manoeuvre.

7. Outil de montage selon la revendication 6, **caractérisé en ce que** ladite articulation (12) comprend une broche (26), qui est reliée de façon rigide à l'un entre ledit élément de guidage (11) et ladite patte de support (10) et peut tourner à l'intérieur d'un trou (28) de l'autre entre ledit élément de guidage (11) et ladite patte de support (10), ladite broche (26) définissant ladite tête (29) de façon solidaire.
